# EUROPEAN PATENT APPLICATION

(11) **EP 4 755 631 A1**
(43) Date of publication of application: **10.06.2026**
(21) Application number: 24848654.0
(22) Date of filing: 27.05.2024
(51) Int. Cl.: B32B 27/34, B32B 27/00, B65D 30/02, B65D 65/40

(54) **MULTILAYER CONTAINER, METHOD FOR PRODUCING RECYCLED POLYAMIDE RESIN, AND METHOD FOR PRODUCING MULTILAYER CONTAINER**

(30) Priority: 31.07.2023 JP 2023124077
(71) Applicant: MITSUBISHI GAS CHEMICAL COMPANY, INC., Chiyoda-ku Tokyo 100-8324 (JP)
(72) Inventor: YAMADA, Takumi, Hiratsuka-shi, Kanagawa 254-0016 (JP); OTSUKA, Kosuke, Tokyo 100-8324 (JP)
(74) Representative: Vossius & Partner Patentanwälte Rechtsanwälte mbB
(86) International application number: PCT/JP2024/019335
(87) International publication number: WO 2025/027993

(57) **Abstract**

Provided are a multilayer container, a method for producing a recycled polyamide resin, and a method for producing a multilayer container. A multilayer container including a first multilayer body including a sealant layer containing an aromatic polyamide resin and a base material layer containing an aliphatic polyamide resin and a second multilayer body including a sealant layer containing an aromatic polyamide resin and a base material layer containing an aliphatic polyamide resin, wherein the sealant layer of the first multilayer body and the sealant layer of the second multilayer body face each other and are partially fused, the sealant layer of the first multilayer body and the sealant layer of the second multilayer body each independently have a thickness of 4 µm or more and 40% or less of a total thickness of the first multilayer body or the second multilayer body, and 95 mass% or more of a resin component contained in the multilayer container is the polyamide resins.

## Description

### Technical Field

The present invention relates to a multilayer container, a method for producing a recycled polyamide resin, and a method for producing a multilayer container. In particular, the present invention relates to a multilayer container or the like containing a polyamide resin as a main component.

### Background Art

Packaging materials used for packaging food products and the like are required to have a wide variety of functions such as strength, pinhole resistance, thermal resistance, and visibility of the contents, to protect the contents from various processes such as distribution and heat sterilization. In addition, to maintain the quality of the contents, barrier properties for preventing permeation of oxygen and moisture are also required. To satisfy such a lot of requirements, multilayer containers in which layers having different properties are laminated are used (Patent Document 1, Patent Document 2, etc.).

### Citation List

### Patent Document

Patent Document 1: JP 2023-068909 A
Patent Document 2: JP 2011-057237 A

### Summary of Invention

### Technical Problem

However, the multilayer container as described above is difficult to separate the resins constituting individual layers, and is not suitable for recycling. It would be ideal if a multilayer container could be formed of a single material or a composition close to a single material.

On the other hand, a film using a polyamide resin is excellent in thermal resistance, strength, and oxygen gas barrier properties, but the polyamide resin tends to be poor in heat sealability, and a sealant layer needs a resin other than the polyamide resin. Thus, it was difficult to form a single material. Further, when an aromatic polyamide resin is used, the impact resistance of the film is not sufficient.

An object of the present invention is to solve such problems. An object of the present invention is to provide a multilayer container having excellent recyclability, excellent heat sealability, and excellent impact resistance, a method for producing a recycled polyamide resin, and a method for producing a multilayer container.

### Solution to Problem

As a result of studies conducted by the inventors of the present invention to solve the above problems, it has been found that the above problems can be solved by fusing a sealant layer containing an aromatic polyamide resin and a base material layer containing an aliphatic polyamide resin to form a container shape, and further, reducing the thickness of the sealant layer to make the polyamide resin account for 95 mass% or more of the entire multilayer container.

Specifically, the above-described problems have been solved by the following means.
<1> A multilayer container including:
   a first multilayer body including a sealant layer containing a polyamide resin and a base material layer containing an aliphatic polyamide resin; and
   a second multilayer body including a sealant layer containing a polyamide resin and a base material layer containing an aliphatic polyamide resin,
   in which
   the sealant layer of the first multilayer body and the sealant layer of the second multilayer body face each other and are partially fused,
   the sealant layer of the first multilayer body and the sealant layer of the second multilayer body each independently have a thickness of 4 µm or more and 40% or less of a total thickness of the first multilayer body or the second multilayer body,
   the polyamide resin contained in the sealant layer of the first multilayer body and the polyamide resin contained in the sealant layer of the second multilayer body are each independently a resin in which 30 mass% or more of all structural units excluding an end group is derived from an aromatic monomer,
   the aliphatic polyamide resin contained in the first multilayer body and the aliphatic polyamide resin contained in the second multilayer body are each independently a resin in which 80 mass% or more of all structural units excluding an end group is derived from an aliphatic monomer, and
   95 mass% or more of a resin component contained in the multilayer container is the polyamide resins.
<2> The multilayer container according to <1>, in which the first multilayer body and the second multilayer body each independently have a moisture content of 10000 mass ppm or less immediately before sealing.
<3> The multilayer container according to <1> or <2>, in which the sealant layer of the first multilayer body and the sealant layer of the second multilayer body each independently have a thickness of 6 µm or more.
<4> The multilayer container according to any one of <1> to <3>, in which the polyamide resin contained in the sealant layer of the first multilayer body and the polyamide resin contained in the sealant layer of the second multilayer body each independently contain a diamine-derived structural unit and a dicarboxylic acid-derived structural unit, and 70 mol% or higher of the diamine-derived structural unit contains a xylylenediamine-based polyamide resin derived from a xylylenediamine.
<5> The multilayer container according to <4>, in which 70 mol% or higher of the dicarboxylic acid-derived structural unit in the xylylenediamine-based polyamide resin is an α,ω-linear aliphatic dicarboxylic acid-derived structural unit having from 4 to 20 carbon atoms.
<6> The multilayer container according to any one of <1> to <5>, in which
   the first multilayer body and the second multilayer body each independently have a moisture content of 10000 mass ppm or less immediately before sealing,
   the sealant layer of the first multilayer body and the sealant layer of the second multilayer body each independently have a thickness of 6 µm or more,
   the polyamide resin contained in the sealant layer of the first multilayer body and the polyamide resin contained in the sealant layer of the second multilayer body each independently contain a diamine-derived structural unit and a dicarboxylic acid-derived structural unit, and 70 mol% or higher of the diamine-derived structural unit contains a xylylenediamine-based polyamide resin derived from a xylylenediamine, and
   70 mol% or higher of the dicarboxylic acid-derived structural is an α,ω-linear aliphatic dicarboxylic acid-derived structural unit having from 4 to 20 carbon atoms.
<7> The multilayer container according to any one of <1> to <6>, in which in at least one of the first multilayer body and the second multilayer body, the sealant layer and the base material layer are in contact with each other directly or with an adhesive layer interposed between the sealant layer and the base material layer, and the sealant layer is an unstretched film.
<8> A method for producing a recycled polyamide resin, the method including crushing the multilayer container according to any one of <1> to <7>.
<9> A method for producing a multilayer container,
   the multilayer container including:
   a first multilayer body including a sealant layer containing a polyamide resin and a base material layer containing an aliphatic polyamide resin; and
   a second multilayer body including a sealant layer containing a polyamide resin and a base material layer containing an aliphatic polyamide resin,
   the method including fusing the first multilayer body and the second multilayer body with the sealant layer of the first multilayer body and the sealant layer of the second multilayer body facing each other and being partially fused to each other,
   in which
   the sealant layer of the first multilayer body and the sealant layer of the second multilayer body each independently have a thickness of 4 µm or more and 40% or less of a total thickness of the first multilayer body or the second multilayer body,
   the polyamide resin contained in the sealant layer of the first multilayer body and the polyamide resin contained in the sealant layer of the second multilayer body are each independently a resin in which 30 % or more of mass of all structural units excluding an end group is derived from an aromatic monomer,
   the aliphatic polyamide resin contained in the first multilayer body and the aliphatic polyamide resin contained in the second multilayer body are each independently a resin in which 80 mass% or more of all structural units excluding an end group is derived from an aliphatic monomer,
   95 mass% or more of a resin component contained in the multilayer container is the polyamide resins, and
   the first multilayer body and the second multilayer body in the fusing each independently have a moisture content of 10000 mass ppm or less immediately before sealing.
<10> The method for producing a multilayer container according to <9>, in which the multilayer container is the multilayer container according to any one of <1> to <7>.

### Advantageous Effects of Invention

The present invention can provide a multilayer container having excellent recyclability, excellent heat sealability, and excellent impact resistance, a method for producing a recycled polyamide resin, and a method for producing a multilayer container.

### Brief Description of Drawings

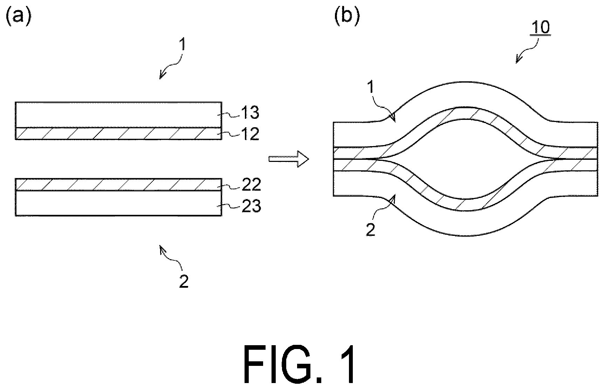

FIG. 1 is a schematic cross-sectional view illustrating an example of a multilayer container of the present invention.

### Description of Embodiments

Hereinafter, modes for carrying out the present invention (hereinafter, simply referred to as "the present embodiment") will be described in detail. The present embodiments described below are examples for describing the present invention, and the present invention is not limited only to the present embodiments.

In the present description, "from ... to ..." or "of ... to ..." is used to mean that the numerical values described before and after "to" are included as the lower limit value and the upper limit value, respectively.

In the present description, various physical property values and characteristic values are those at 23°C unless otherwise noted.

In the present description, "ppm" means "mass ppm" unless otherwise noted.

When the measurement methods or the like described in the standards set forth in the present description differ depending on the year, the measurement methods or the like are based on the standards as of January 1, 2023, unless otherwise noted.

In FIG. 1, scales and the like may be not consistent with the actual scales and the like.

A multilayer container of the present embodiment includes a first multilayer body including a sealant layer containing a polyamide resin and a base material layer containing an aliphatic polyamide resin and a second multilayer body including a sealant layer containing a polyamide resin and a base material layer containing an aliphatic polyamide resin, in which the sealant layer of the first multilayer body and the sealant layer of the second multilayer body face each other and are partially fused, the sealant layer of the first multilayer body and the sealant layer of the second multilayer body each independently have a thickness of 4 µm or more and 40% or less of a total thickness of the first multilayer body or the second multilayer body, the polyamide resin contained in the sealant layer of the first multilayer body and the polyamide resin contained in the sealant layer of the second multilayer body are each independently a resin in which 30 mass% or more of all structural units excluding an end group is derived from an aromatic monomer,
the aliphatic polyamide resin contained in the first multilayer body and the aliphatic polyamide resin contained in the second multilayer body are each independently a resin in which 80 mass% or more of all structural units excluding an end group is derived from an aliphatic monomer, and 95 mass% or more of a resin component contained in the multilayer container is the polyamide resins.

Such a constitution can provide a multilayer container having excellent recyclability, excellent heat sealability, and excellent impact resistance.

That is, the sealant layers were able to be fused to each other by using a polyamide resin (in the present description, it may be referred to as "aromatic polyamide resin") containing a structural unit derived from an aromatic monomer for the resin constituting the sealant layers and setting the thickness thereof to 4 µm or more. Further, use of an aliphatic polyamide resin for the resin constituting the base material layer made it possible to have a constitution close to a single material composed only of a polyamide resin, and a material having excellent recyclability was obtained. Further, in the present embodiment, the thickness of the sealant layer containing an aromatic polyamide resin was made relatively thin, and thus, a multilayer body having excellent impact resistance was obtained.

### <Layer Constitution of Multilayer Container>

The multilayer container of the present embodiment includes, for example, a first multilayer body 1 and a second multilayer body 2 as illustrated in FIG. 1(a). The first multilayer body 1 includes a sealant layer 12 containing an aromatic polyamide resin and a base material layer 13 containing an aliphatic polyamide resin. The second multilayer body 2 has a sealant layer 22 containing an aromatic polyamide resin and a base material layer 23 containing an aliphatic polyamide resin. In the multilayer body 10 of the present embodiment, the sealant layer of the first multilayer body and the sealant layer of the second multilayer body face each other and are partially fused (FIG. 1(b)). The multilayer container formed by the fusing can be used as a packaging container.

In the multilayer container illustrated in FIG. 1, the sealant layer and the base material layer are in direct contact with each other, but the sealant layer and the base material layer may be in contact with each other with an adhesive layer interposed therebetween.

In the present embodiment, it is preferable that the sealant layer and the base material layer are in direct contact with each other without having an adhesive layer. In the present embodiment, the sealant layer and the base material layer can be produced as a co-extruded body by co-extruding the sealant layer and the base material layer, and thus, the sealant layer and the base material layer can be adhered without an adhesive.

The multilayer body in the present embodiment can be produced using a known method such as a co-extrusion method, various lamination methods, and various coating methods according to the properties of various materials, processing purposes, processing steps, and the like, and the production method is not particularly limited. In the production of the multilayer body, a method of laminating normal packaging materials, for example, a wet lamination method, a dry lamination method, a solventless dry lamination method, an extrusion lamination method, a T-die co-extrusion molding method, a co-extrusion lamination method, an inflation method, or the like can be applied.

When the multilayer body is produced, the film or the like can be subjected to a pretreatment such as a corona treatment or an ozone treatment as necessary.

On the other hand, when the sealant layer and the base material layer are in contact with each other with an adhesive layer interposed therebetween, the adhesive layer is preferably an adhesive for dry lamination having adhesiveness. Examples of the adhesive for dry lamination include a one-component type in which a urethane-based adhesive having an isocyanate group is used singly, and a two-component type urethane-based adhesive in which a main agent having a hydroxyl group and a curing agent having an isocyanate group are mixed and used. A two-component type urethane-based adhesive is particularly preferable.

When the multilayer body is produced through co-extrusion, the adhesive layer preferably contains a thermoplastic resin having adhesiveness. Examples of the thermoplastic resin having adhesiveness include an acid-modified polyolefin resin obtained by modifying a polyolefin resin such as polyethylene or polypropylene with an acid such as an unsaturated carboxylic acid (acrylic acid, methacrylic acid, maleic acid, maleic anhydride, fumaric acid, itaconic acid, or the like), and a polyester-based thermoplastic elastomer containing a polyester-based block copolymer as a main component. An acid-modified polyolefin resin is preferable. More specifically, when a polypropylene-based polymer is used as the polyolefin resin, the resin contained in the adhesive layer may be an acid-modified polypropylene-based polymer. The adhesive layer may be in a form not containing a terpolymer of alkene-(meth) acrylic acid ester-unsaturated carboxylic acid.

When the multilayer body is produced by an extrusion lamination method, for the adhesive layer, a known anchor coating agent or adhesive, for example, an anchor coating agent such as an isocyanate-based (urethane-based), polyethyleneimine-based, polybutadiene-based, or organic titanium-based anchor coating agent, or an adhesive for lamination such as a polyurethane-based, polyacryl-based, polyester-based, epoxy-based, polyvinyl acetate-based, or cellulose-based adhesive for lamination can be used.

The adhesive layer may contain only one thermoplastic resin having adhesiveness, or two or more thermoplastic resins having adhesiveness. In the adhesive layer, the total amount of the thermoplastic resin having adhesiveness accounts for preferably 80 mass% or more, more preferably 90 mass% or more of the entire adhesive layer. Examples of the component other than the thermoplastic resin having adhesiveness contained in the adhesive layer include additives such as an antioxidant, a matting agent, a weather resistant stabilizer, an ultraviolet absorber, a crystallization nucleating agent, a plasticizer, a flame retardant, and an antistatic agent.

The lower limit value of the thickness of the adhesive layer is preferably 2 µm or more, more preferably 3 µm or less, from the viewpoint of securing molding processability while exhibiting practical adhesive strength. The upper limit value of the thickness is preferably 100 µm or less, more preferably 90 µm or less, still more preferably 50 µm or less, further preferably 30 µm or less, still further preferably 10 µm or less, and it may be 5 µm or less.

The base material layer may be a stretched film or an unstretched film. When the base material layer is a stretched film, the sealant layer and the base material layer are preferably bonded to each other using an adhesive.

The multilayer container of the present embodiment may have another layer without departing from the gist of the present invention. For example, the multilayer container may have a design layer on a surface of the base material layer. In this case, the design layer is also preferably formed of a polyamide resin.

The thickness of the sealant layer of the first multilayer body and the thickness of the sealant layer of the second multilayer body are each independently 4 µm or more, preferably 5 µm or more, more preferably 6 µm or more, still more preferably 7 µm or more, further preferably 8 µm or more. The thickness is preferably 30 µm or less, more preferably 25 µm or less, still more preferably 23 µm or less, further preferably 20 µm or less, still further preferably 19 µm or less, yet still further preferably 10 µm or less. With the thickness equal to or more than the lower limit value, the heat seal strength tends to be further improved. With the thickness equal to or less than the upper limit value, impact resistance and pinhole resistance tend to be further improved.

The proportion of the thickness of the first sealant layer to the total thickness of the first multilayer body and the proportion of the thickness of the second sealant layer to the total thickness of the second multilayer body are each independently 40% or less. With such a constitution, the brittleness derived from the aromatic polyamide resin can be compensated by the flexibility of the aliphatic polyamide of the base material, and the flexibility and impact resistance as a multilayer container tend to be improved.

The proportion of the thickness of the first sealant layer to the total thickness of the first multilayer body and the proportion of the thickness of the second sealant layer to the total thickness of the second multilayer body are each independently preferably 35% or less, more preferably 32% or less, still more preferably 30% or less, further preferably 28% or less, still further preferably 27% or less. With the proportion equal to or less than the upper limit value, excellent flexibility and impact resistance as a container tend to be achieved. The lower limit values of the proportion of the thickness of the first sealant layer to the total thickness of the first multilayer body and the proportion of the thickness of the second sealant layer to the total thickness of the second multilayer body are each preferably 1% or more, more preferably 2% or more, still more preferably 3% or more, further preferably 6% or more, still further preferably 7% or more, yet still further preferably 9% or more, and it may be 10 mass% or more. With the proportion equal to or more than the lower limit value, the heat seal strength tends to be improved.

The thickness of the base material layer of the first multilayer body and the thickness of the base material layer of the second multilayer body are each independently 30 µm or more, more preferably 35 µm or more, still more preferably 40 µm or more, further preferably 45 µm or more, and is preferably 180 µm or less, more preferably 140 µm or less, still more preferably 100 µm or less, further preferably 80 µm or less, still further preferably 75 µm or less, yet still further preferably 70 µm or less. With the thickness equal to or more than the lower limit value, the strength of the multilayer container tends to be improved, and excellent protective properties for the contents tends to be achieved. With the thickness equal to or less than the upper limit value, flexibility and impact resistance tend to be further improved.

In the multilayer container of the present embodiment, the thickness of the body portion (thickness of each of the first multilayer body and the second multilayer body) is preferably 20 µm or more, more preferably 30 µm or more, still more preferably 40 µm or more, further preferably 45 µm or more, still further preferably 50 µm or more, yet still further preferably 55 µm or more, particularly further preferably 60 µm or more, yet particularly further preferably 65 µm or more. In the multilayer container of the present embodiment, the thickness of the body portion (thickness of each of the first multilayer body and the second multilayer body) is preferably 200 µm or less, more preferably 150 µm or less, still more preferably 100 µm or less, further preferably 90 µm or less, still further preferably 85 µm or less, yet still further preferably 82 µm or less, yet still further preferably 81 µm or less.

The first multilayer body and the second multilayer body in the multilayer body of the present embodiment usually have one sealant layer and one base material layer, but the sealant layer may be a multilayer body of two or more layers, and the base material layer may be a multilayer body of two or more layers. When the sealant layer and/or the base material layer is composed of two or more layers, the total of the layers satisfies the thickness described above and desired composition.

The shape of the multilayer container is not particularly limited, and may be, for example, a molded container such as a bottle, a cup, a tube, a tray, or a storage container, or may be a bag-shaped container such as a pouch, a standing pouch, or a zippered storage bag. In the present embodiment, the multilayer container is preferably a pouch.

The capacity of the multilayer container of the present embodiment is preferably from 0.01 to 2.0 L, preferably from 0.02 to 1.0 L, more preferably from 0.03 to 0.5 L from the viewpoint of the storage properties of the contents.

For the details of the multilayer container, reference can be made to the descriptions in paragraphs [0104] to [0133] of WO 2017/141969 without departing from the spirit of the present invention, the contents of which are incorporated herein by reference.

Intended product to be stored in the multilayer container of the present embodiment is not particularly limited, and examples thereof include food products, cosmetics, pharmaceuticals, toiletries, mechanical, electrical, and electronic components, oils, and resins. In particular, the multilayer container of the present embodiment can be suitably used as a container for storing food products.

Examples of food products include processed fishery products, processed livestock products, rice, and liquid food products. The multilayer container of the present embodiment is particularly suitable for storing food products that are easily affected by oxygen. For details thereof, reference can be made to the descriptions in paragraphs 0032 to 0035 of JP 2011-37199 A, the contents of which are incorporated herein by reference.

The food product to be filled is not particularly limited, and specific examples include beverages such as vegetable juice, fruit juice, teas, coffee and coffee beverages, milk and milk beverages, mineral water, ionic beverages, alcoholic beverages, lactic acid bacteria beverages, and soy milk; gel food products such as tofu, egg tofu, jelly, pudding, soft adzuki-bean jelly, mousse, yogurt, and almond tofu; seasonings such as sauces, soy sauce, ketchup, noodle soup bases, Japanese dipping or topping sauces, vinegar, mirin, dressings, jams, mayonnaise, miso, pickle bases, and grated spices; processed meat products such as salami, ham, sausage, yakitori, meatballs, hamburger, grilled pork, and beef jerky; processed fishery products such as kamaboko fish cake, boiled shellfish, boiled fish, and tube-shaped fish cakes; processed rice products such as porridge, cooked rice, rice casserole, and red rice; sauces such as meat sauce, mapo sauce, pasta sauce, curry, stews, and hash sauce; dairy products such as cheese, butter, cream, and condensed milk; processed egg products such as boiled eggs and soft boiled eggs; boiled vegetables and boiled beans; side dishes such as fried foods, steamed foods, stir fry, boiled foods, and baked foods; Japanese pickled vegetables; noodles and pastas such as udon, soba, and spaghetti; and syrup-preserved fruit.

Depending on the target content to be stored, the multilayer container may be disinfected or sterilized using ultraviolet rays, electron beams, gamma rays, X-rays, and the like.

### <Composition of First Multilayer Body and Second Multilayer Body>

Next, the compositions of the first multilayer body and the second multilayer body of the present embodiment will be described.

The first multilayer body and the second multilayer body in the present embodiment each independently include a sealant layer containing an aromatic polyamide resin and a base material layer containing an aliphatic polyamide resin. A multilayer container is obtained by fusing (sealing) the multilayer bodies each containing such a sealant layer with the sealant layer portions facing each other.

The first multilayer body and the second multilayer body may be the same or different.

The sealant layers contained in the first multilayer body and the second multilayer body each independently contain a polyamide resin.

The polyamide resin contained in the sealant layers contained in the first multilayer body and the second multilayer body is preferably a resin in which 30 mass% or more of all structural units excluding the end group is derived from an aromatic monomer, preferably a resin in which 40 mass% or more of all structural units excluding the end group is derived from an aromatic monomer, and preferably a resin in which 70 mass% or less of all structural units excluding the end group is derived from an aromatic monomer, more preferably a resin in which 60 mass% or less of all structural units excluding the end group is derived from an aromatic monomer.

Such a polyamide resin may be composed of only an aromatic polyamide resin, or may be a blend of an aromatic polyamide resin and an aliphatic polyamide resin. In the polyamide resin contained in the sealant layer, 30 mass% or more of all structural units excluding the end group is an aromatic monomer-derived structural unit.

Examples of the aromatic polyamide resin include polyhexamethylene terephthalamide (polyamide 6T), polyhexamethylene isophthalamide (polyamide 6I), polyamide 66/6T, polyamide 9T, polyamide 9MT, polyamide 10T, polyamide 6I/6T, and xylylenediamine-based polyamide resins described later. Xylylenediamine-based polyamide resins are preferable.

The xylylenediamine-based polyamide resin in the present embodiment is a polyamide resin containing a diamine-derived structural unit and a dicarboxylic acid-derived structural unit, in which 70 mol% or higher of the diamine-derived structural unit is derived from a xylylenediamine.

Preferably, in the xylylenediamine-based polyamide resin, for example, 50 mol% or higher, preferably 70 mol% or higher of the dicarboxylic acid-derived structural unit is derived from an α,ω-linear aliphatic dicarboxylic acid having from 4 to 20 carbon atoms. In the multilayer container of the present embodiment, the strength and chemical resistance inherent in the xylylenediamine-based polyamide resin can be exhibited.

In the xylylenediamine-based polyamide resin, preferably 75 mol% or higher, more preferably 80 mol% or higher, still more preferably 85 mol% or higher, further preferably 90 mol% or higher, still further preferably 95 mol% or higher, particularly further preferably 99 mol% or higher, of the diamine-derived structural unit is derived from a xylylenediamine (preferably p-xylylenediamine and/or m-xylylenediamine, more preferably m-xylylenediamine). In the xylylenediamine-based polyamide resin, more preferably 60 mol% or higher, still more preferably 70 mol% or higher, further preferably 80 mol% or higher, still further preferably 90 mol% or higher, yet still further preferably 95 mol% or higher, particularly further preferably 99 mol% or higher, of the dicarboxylic acid-derived structural unit is derived from an α,ω-linear aliphatic dicarboxylic acid having from 4 to 20 carbon atoms (preferably adipic acid).

In the present embodiment, the mole ratio between m-xylylenediamine and p-xylylenediamine in the xylylenediamine, that is, m-xylylenediamine/p-xylylenediamine, is preferably from 00 to 100/from 100 to 0, preferably from 10 to 100/from 90 to 0, more preferably from 40 to 100/from 60 to 0, still more preferably from 60 to 100/from 40 to 0, further preferably from 80 to 100/from 20 to 0, still further preferably from 90 to 100/from 10 to 0 when the total of m-xylylenediamine and p-xylylenediamine is 100 mol.

Examples of the diamine that can be used as a raw material diamine component of the xylylenediamine-based polyamide resin, other than m-xylylenediamine or p-xylylenediamine, include an aliphatic diamine, such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethylhexamethylenediamine, or 2,4,4-trimethylhexamethylenediamine; an alicyclic diamine, such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin, or bis(aminomethyl)tricyclodecane; and a diamine having an aromatic ring, such as bis(4-aminophenyl)ether, p-phenylenediamine, or bis(aminomethyl)naphthalene. One of these diamines, or a mixture of two or more of these may be used.

As described above, in the xylylenediamine-based polyamide resin, 50 mol% or higher of the dicarboxylic acid-derived structural unit is preferably derived from an α,ω-linear aliphatic dicarboxylic acid having from 4 to 20 carbon atoms. The number of carbon atoms of the α,ω-linear aliphatic dicarboxylic acid having from 4 to 20 carbon atoms is preferably 6 or more, and is preferably 18 or less, more preferably 16 or less, still more preferably 14 or less, further preferably 13 or less, still further preferably 12 or less, yet still further preferably 10 or less, particularly further preferably 8 or less.

Examples of the α,ω-linear aliphatic dicarboxylic acid having from 4 to 20 carbon atoms that is preferably used as the raw material dicarboxylic acid component of the xylylenediamine-based polyamide resin include an aliphatic dicarboxylic acid, such as succinic acid, glutaric acid, pimelic acid, suberic acid, azelaic acid, adipic acid, sebacic acid, undecanedioic acid, and dodecanedioic acid. One of these aliphatic dicarboxylic acids, or a mixture of two or more of these may be used. Among these, one or more of adipic acid, sebacic acid, and dodecanedioic acid is more preferable, one or more of adipic acid and sebacic acid is still more preferable, and adipic acid is still more preferable.

Examples of a preferable embodiment of the xylylenediamine-based polyamide resin in the present embodiment include a xylylenediamine-based polyamide resin in which 50 mol% or higher (preferably 70 mol% or higher, more preferably 90 mol% or higher) of the dicarboxylic acid-derived structural unit is derived from adipic acid.

Examples of the dicarboxylic acid component other than the α,ω-linear aliphatic dicarboxylic acid having from 4 to 20 carbon atoms described above include a phthalic acid compound, such as isophthalic acid, terephthalic acid, or orthophthalic acid; and an isomer of naphthalenedicarboxylic acid, such as 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, or 2,7-naphthalenedicarboxylic acid. One of these dicarboxylic acid components, or a mixture of two or more of these may be used.

The xylylenediamine-based polyamide resin contains a diamine-derived structural unit and a dicarboxylic acid-derived structural unit as main components, but it does not entirely exclude structural units other than these. Of course, the xylylenediamine-based polyamide resin may contain a structural unit derived from a lactam such as ε-caprolactam or laurolactam, or from an aliphatic aminocarboxylic acid such as aminocaproic acid or aminoundecanoic acid. Here, the main component means a component having the largest total number of the diamine-derived structural units and the dicarboxylic acid-derived structural units among all structural units constituting the xylylenediamine-based polyamide resin. In the present embodiment, the total of the diamine-derived structural units and the dicarboxylic acid-derived structural units in the xylylenediamine-based polyamide resin preferably accounts for 90 mass% or more, more preferably 95 mass% or more, still more preferably 97 mass% or more, further preferably 99 mass% or more, of all structural units.

The content proportions of the aromatic polyamide resin (preferably the xylylenediamine-based polyamide resin) in the sealant layers contained in the first multilayer body and the second multilayer body are, each independently, preferably 50 mass% or more, more preferably 60 mass% or more, still more preferably 70 mass% or more, in 100 mass% of the corresponding sealant layer. With the content proportions equal to or more than the lower limit value, the heat seal strength tends to be further improved. The content proportion of the aromatic polyamide resin in the sealant layer contained in the first multilayer body and the second multilayer body of the present embodiment is 100 mass% or less in 100 mass% of the sealant layer.

The sealant layer of the present embodiment may contain only one aromatic polyamide resin or two or more aromatic polyamide resins. When two or more aromatic polyamide resins are contained, the total amount is preferably in the range described above.

Examples of the aliphatic polyamide resin that can be contained in the sealant layer include polyamide 4, polyamide 46, polyamide 410, polyamide 6, polyamide 66, polyamide 666, polyamide 610, polyamide 11, polyamide 116, polyamide 12, and polyamide 612. Polyamide 6, polyamide 66, and polyamide 666 are more preferable, and polyamide 6 is still more preferable. When the sealant layer contains an aliphatic polyamide resin, the pinhole resistance tends to be further improved.

The sealant layer of the present embodiment does not have to contain the aliphatic polyamide resin, may contain only one aliphatic polyamide resin, or may contain two or more aliphatic polyamide resins.

As the aromatic polyamide resin and the aliphatic polyamide resin, it is also preferable to use an aromatic polyamide resin (biomass thermoplastic resin) produced using a recycled resin or a biomass raw material. Use of a biomass thermoplastic resin can reduce environmental load.

For example, in the xylylenediamine-based polyamide resin, a bioadipic acid can be used as a biomass raw material. Adipic acid that has been mass balance certified (ISCC PLUS) can also be used. The mass balance certification means that degrees of usage of reusable raw materials and raw biomaterials for each factory or production facility and degrees of production and shipment of products are quantified and certified together with quality.

The glass transition temperature of the polyamide resin contained in the sealant layer is preferably 50°C or more, more preferably 60°C or more, and is preferably 160°C or less, more preferably 120°C or less. When the sealant layer in the present embodiment contains two or more aromatic polyamide resins, the glass transition temperature of the aromatic polyamide resin is the glass transition temperature of the resin of the component having the highest content.

The melting point of the polyamide resin contained in the sealant layer is preferably 150°C or more, more preferably 180°C or more, still more preferably 200°C or more, further preferably 205°C or more. The melting point of the polyamide resin contained in the sealant layer is preferably 350°C or less, more preferably 330°C or less, still more preferably 300°C or less, further preferably 280°C or less, still further preferably 260°C or less, yet still further preferably 250°C or less. When the sealant layer in the present embodiment contains two or more aromatic polyamide resins, the melting point of the aromatic polyamide resin is the melting point of the resin of the component having the highest content.

In the present description, the glass transition temperature (Tg) and the melting point (Tm) are values measured by differential scanning calorimetry (DSC) in accordance with ISO 11357. A differential scanning calorimeter is used, and the resin is placed in a measuring pan of the differential scanning calorimeter, and subjected to a pretreatment of heating to a temperature exceeding the melting point at a temperature increasing rate of 10°C/min under a nitrogen atmosphere and then performing rapid cooling, thereafter the measurements are performed. As the measurement conditions, the temperature is increased to 280°C at a temperature increase rate of 10°C/min, and then maintained at 280°C for 5 minutes, after which the temperature is reduced to 100°C at a temperature decrease rate of -5°C/min, and measurements were then performed to determine the glass transition temperature (Tg) and the melting point (Tm) .

The differential scanning calorimeter used is "DSC-60" available from Shimadzu Corporation.

The lower limit of the number-average molecular weight (Mn) of the polyamide resin contained in the sealant layer is preferably 6000 or more, more preferably 8000 or more, still more preferably 10000 or more, and is preferably 100000 or less, more preferably 50000 or less. When the sealant layer used in the present embodiment contains two or more polyamide resins, the number-average molecular weight of the mixture is taken as the number-average molecular weight.

In the measurement of the number-average molecular weight (Mn) of the aromatic polyamide resin, the number-average molecular weight can be determined in terms of polymethyl methacrylate (PMMA) standard obtained through gel permeation chromatography (GPC) measurement. Two columns, in which a styrene-based polymer is charged as a filler, are used as columns. Hexafluoroisopropanol (HFIP) having a sodium trifluoroacetate concentration of 2 mmol/L is used as a solvent. The measurement is performed at a resin concentration of 0.02 mass%, a column temperature of 40°C, a flow rate of 0.3 mL/min, using a refractive index detector (RI). The calibration curve is measured by dissolving 6 levels of PMMA in HFIP.

The sealant layer used in the present embodiment may or may not contain a thermoplastic resin other than the polyamide resin as long as the object and effect of the present invention are not impaired.

In the sealant layer used in the present embodiment, the total of polyamide resins (aromatic polyamide resin and aliphatic polyamide resin) accounts for preferably 90 mass% or more, more preferably 95 mass% or more, still more preferably 97 mass% or more, further preferably 98 mass% or more, optionally 99 mass% or more, and preferably 100 mass% or less of the sealant layer.

Preferably, the sealant layer used in the present embodiment is substantially free of a thermoplastic resin other than the polyamide resin. Specifically, the content of the thermoplastic resin other than the polyamide resin contained in the sealant layer in the present embodiment is preferably less than 1 mass%, more preferably less than 0.1 mass%, in 100 mass% of the sealant layer.

For example, resin additives, such as an antioxidant, a stabilizer including a thermal stabilizer, a hydrolysis-resistance improving agent, a weather resistant stabilizer, a matting agent, an ultraviolet absorber, a nucleating agent, a plasticizer, a dispersant, a flame retardant, an antistatic agent, an anticolorant, an anti-gelling agent, a colorant, and a release agent can be added to the sealant layer used in the present embodiment. For details of these, reference can be made to the descriptions in paragraphs 0130 to 0155 of JP 4894982 B and the descriptions in paragraphs 0047 to 0103 of WO 2021/241471, the contents of which are incorporated herein by reference.

The total content of the resin additives in the sealant layer used in the present embodiment is preferably from 0 to 5 mass%, more preferably from 0 to 3 mass% with respect to the sealant layer.

In the multilayer container of the present embodiment, the total amount of the polyamide resin containing the aromatic polyamide resin and the aliphatic polyamide resin is preferably 95 mass% or more, more preferably 97 mass% or more, may be 99 mass% or more, and is preferably 100 mass% or less of the resin component contained in the multilayer container. With the total amount equal to or more than the lower limit value, the recyclability of the multilayer container can further improve.

Here, the resin component means the polyamide resin and other thermoplastic resins and resin additives, and is usually all the components other than the filler or the solvent contained in the multilayer container.

The total amount of the components other than the polyamide resin contained in the resin component is preferably from 0 to 3 mass%, more preferably from 0 to 1 mass%.

The sealant layers in the multilayer container of the present embodiment may be the same or different.

The sealant layer contained in the first multilayer body and the content of the sealant layer contained in the second multilayer body are in common in composition in an amount of preferably 80 mass% or more, more preferably 90 mass% or more, still more preferably 95 mass% or more. Such a constitution can increase the fusion strength between the multilayer bodies.

The base material layers contained in the first multilayer body and the second multilayer body each independently contain an aliphatic polyamide resin.

The aliphatic polyamide resin is a resin in which 80 mass% or more of all structural units excluding the end group is derived from an aliphatic monomer, preferably a resin in which 85 mass% or more of all structural units excluding the end group is derived from an aliphatic monomer, more preferably a resin in which 90 mass% or more of all structural units excluding the end group is derived from an aliphatic monomer, still more preferably a resin in which 95 mass% or more of all structural units excluding the end group is derived from an aliphatic monomer, further preferably a resin in which 97 mass% or more of all structural units excluding the end group is derived from an aliphatic monomer. The upper limit of the proportion of the structural units derived from the aliphatic monomer in the aliphatic polyamide resin is 100 mass% of all structural units excluding the end group.

Examples of the aliphatic polyamide resin include polyamide 4, polyamide 46, polyamide 410, polyamide 6, polyamide 66, polyamide 666, polyamide 610, polyamide 11, polyamide 116, polyamide 12, and polyamide 612. Polyamide 6, polyamide 66, and polyamide 666 are more preferable, and polyamide 6 is still more preferable.

As the aliphatic polyamide resin, it is also preferable to use an aliphatic polyamide resin produced using a recycled resin or a biomass raw material (biomass thermoplastic resin). Use of a biomass thermoplastic resin can reduce environmental load.

The content proportions of the aliphatic polyamide resin in the base material layers contained in the first multilayer body and the second multilayer body are each independently preferably 93 mass% or more, more preferably 95 mass% or more, still more preferably 96 mass% or more, further preferably 97 mass% or more, still further preferably 98 mass% or more, yet still further preferably 99 mass% or more, in 100 mass% of the base material layer. With the content proportion equal to or more than the lower limit value, flexibility and impact resistance tend to be further improved. The content proportion of the aliphatic polyamide resin in the base material layer contained in the first multilayer body and the second multilayer body of the present embodiment is 100 mass% or less in 100 mass% of the base material layer.

The base material layer of the present embodiment may contain only one aliphatic polyamide resin, or two or more aliphatic polyamide resins. When two or more aliphatic polyamide resins are contained, the total amount is preferably in the range described above.

The base material layer used in the present embodiment may or may not contain a polyamide resin other than the aliphatic polyamide resin, or a thermoplastic resin other than the polyamide resin as long as the object and effect of the present invention are not impaired.

Preferably, the base material layer used in the present embodiment is substantially free of a thermoplastic resin other than the polyamide resin. Specifically, the content of the thermoplastic resin other than the polyamide resin contained in the base material layer in the present embodiment is preferably less than 1 mass%, more preferably less than 0.1 mass% in 100 mass% of the base material layer.

Preferably, the base material layer used in the present embodiment is substantially free of a polyamide resin other than the aliphatic polyamide resin. Specifically, the content of the polyamide resin other than the aliphatic polyamide resin contained in the base material layer in the present embodiment is preferably less than 10 mass%, more preferably less than 5 mass%, still more preferably less than 3 mass%, further preferably less than 1 mass%, still further preferably less than 0.1 mass% in 100 mass% of the base material layer.

For example, resin additives such as an antioxidant, a stabilizer including a thermal stabilizer, a hydrolysis-resistance improving agent, a weather resistant stabilizer, a matting agent, an ultraviolet absorber, a nucleating agent, a plasticizer, a dispersant, a flame retardant, an antistatic agent, an anticolorant, an anti-gelling agent, a colorant, and a release agent can be added to the base material layer used in the present embodiment. For details of these, reference can be made to the descriptions in paragraphs 0130 to 0155 of JP 4894982 B and the descriptions in paragraphs 0047 to 0103 of WO 2021/241471, the contents of which are incorporated herein by reference.

The total content of the resin additives in the base material layer used in the present embodiment is preferably from 0 to 5 mass%, more preferably from 0 to 3 mass% of the base material layer.

The base material layers in the multilayer container of the present embodiment may be the same or different.

The base material layer contained in the first multilayer body and the base material layer contained in the second multilayer body are in common in composition in an amount of preferably 80 mass% or more, more preferably 90 mass% or more, still more preferably 95 mass% or more.

### <Method for Producing Multilayer Container>

The method for producing the multilayer container of the present embodiment is not particularly limited. The multilayer container can be produced by a known method. Usually, the multilayer container is preferably produced by fusing the first multilayer body and the second multilayer body with the sealant layer of the first multilayer body and the sealant layer of the second multilayer body facing each other and being partially fused. The first multilayer body and the second multilayer body have the same meaning as the matter described in the above-described section of the multilayer container, and the preferable ranges thereof are also the same. In the multilayer container of the present embodiment, preferably, the first multilayer body and the second multilayer body at the time of fusion each independently have a moisture content of 10000 mass ppm or less immediately before sealing (fusion). With the moisture content in the range, fusion at a low temperature becomes possible. In addition, when the polyamide resin is a crystalline resin, the crystallization rate is reduced, the sealant layers can be slowly fused, and the seal strength tends to be further improved, which is preferable.

The moisture content is more preferably 9000 mass ppm or less, more preferably 7000 mass ppm or less, still more preferably 5000 mass ppm or less, further preferably 4500 mass ppm or less, and depending on the application and the like, it may be 3500 mass ppm or less, 3000 mass ppm or less, or 2500 mass ppm or less. The lower limit value of the moisture content is 0 mass ppm or more.

In the present embodiment, to keep the moisture content, it is preferable to store the produced first multilayer body and second multilayer body under a condition that the multilayer bodies hardly take up moisture until immediately before sealing.

The temperature at the time of fusion is, based on the glass transition temperature (Tg) of the polyamide resin, preferably Tg or more, more preferably Tg + 20°C or more, still more preferably Tg + 30°C or more, further preferably Tg + 35°C or more, still further preferably Tg + 45°C or more. With the proportion equal to or more than the lower limit value, the heat seal strength tends to be improved. The upper limit of the temperature at the time of fusion is, based on the glass transition temperature (Tg) of the polyamide resin, preferably Tg + 140°C or less, more preferably Tg + 130°C or less, still more preferably Tg + 120°C or less, further preferably Tg + 110°C or less, still further preferably Tg + 100°C or less. With the temperature equal to or less than the upper limit value, the heat seal strength tends to be further improved.

The temperature at the time of thermal fusion is preferably 200°C or less, more preferably 180°C or less, still more preferably 160°C or less, and depending on the application and the like, further preferably 140°C or less, and is preferably 80°C or more, more preferably 100°C or more, still more preferably 110°C or more, and depending on the application and the like, further preferably 130°C or more.

The temperature at the time of thermal fusion may be constant, or may be gradually increased and/or decreased. In this case, the highest thermal fusion temperature is preferably in the range described above.

The fusion time is not particularly limited, but is, for example, 1 second or more and 1 minute or less. The pressure at the time of fusion is not particularly limited, but is, for example, 0.2 MPa or more and 0.5 MPa or less.

### <Method for Producing Recycled Polyamide Resin>

The present embodiment discloses a method for producing a recycled polyamide resin including crushing the multilayer container. That is, because most of the multilayer container of the present embodiment is constituted by a polyamide resin, the multilayer container is close to a single material, and can be pulverized into a recycled polyamide resin.

Further, it is also preferable to form the base material layer of the multilayer container of the present embodiment using the recycled polyamide resin obtained by the method for producing a recycled polyamide resin of the present embodiment.

### Examples

Hereinafter, the present invention will be described more specifically with reference to Examples. Materials, amounts used, proportions, processing details, processing procedures, and the like described in the following examples can be appropriately changed as long as they do not depart from the spirit of the present invention. Thus, the scope of the present invention is not limited to the specific examples described below.

When it is difficult to obtain a measuring instrument or the like used in Examples because of discontinuation or the like, another instrument with equivalent performance can be used for the measurements.

### 1. Raw Material

PA-1: polyamide resin (MXD6) synthesized from m-xylylenediamine and adipic acid, available from MITSUBISHI GAS CHEMICAL COMPANY, INC., S6007, melting point: 237°C, glass transition temperature: 85°C
PA-2: polyamide resin (MXD6) synthesized from m-xylylenediamine, adipic acid, and isophthalic acid, available from MITSUBISHI GAS CHEMICAL COMPANY, INC., S7007, melting point: 229°C, glass transition temperature: 92°C
PA6: polyamide 6, available from UBE Corporation, product number 1022B
PA666: polyamide 666, available from UBE Corporation, product number 5023B
PA6I/6T: Polyamide 6I/6T, available from Ems-Chemie Holding AG, G21

### 2. Examples 1 to 19, Comparative Examples 1 to 5

### <Production of Multilayer Body>

A multilayer sheet manufacturing apparatus equipped with two extruders, a feed block, a T-die, a chill roll, a winder, and the like was used. PA6 was extruded from the first extruder at 240°C, and each of the sealant layer resins described in Examples was extruded from the second extruder at 260°C, whereby a multilayer body having a two-type two-layer structure of PA6/sealant layer was produced via the feed block.

The resultant multilayer body was hermetically sealed and stored in a moisture-proof film until each test was performed.

### <Method for Measuring Moisture Content of Multilayer Body>

The moisture content rate was measured by a method in accordance with ISO 15512 using a Karl Fischer moisture meter. The values were expressed in units of ppm.

As the Karl Fischer moisture meter, a coulometric titration type fine water content measuring apparatus, type CA-200, available from NittoSeiko Analytech Co., Ltd. (former Mitsubishi Chemical Analytech Co., Ltd.) was used.

### <Heat Seal Strength>

The sealant layers of the two obtained multilayer bodies obtained as described above were placed to face each other, and the adhesive strength when the sealant layers were fused at seal temperatures of 120°C and 150°C was evaluated as follows.

The heat-sealed film was conditioned in an environment of 23°C and 50%RH for 1 week. The seal portion was cut into a width of 15 mm, and a T-peel test was performed at a speed of 300 mm/min using a Strograph available from Toyo Seiki Seisaku-sho, Ltd. The maximum point load at the time of peeling was measured, and this was taken as the T-peel load to evaluate the seal strength. The number of measurements was 5 for each, and the average value was taken. The values were expressed in units of N/15 mm.

### <Impact Resistance>

The multilayer body obtained as described above was subjected to a film impact test as follows.

The resultant stretched film was cut into 10 cm square, and the film impact value was measured by using a film impact tester in accordance with ASTM D3420. In the present Examples, FT-60, available from Orientec Corporation was used as the film impact tester. The values were expressed in units of kgfcm.

### <Pinhole Resistance>

The pinhole resistance was evaluated with a Gelbo Flex test as follows.

The resultant stretched film was cut into 25 cm square and fixed to a pinhole resistance tester, and the film was bent for 1000 times by continuously subjecting the film to 440° twisting motion and 65 mm linear motion at a rate of 40 times/min. The number of pinholes of the film after bending was measured by using a pinhole inspection machine to calculate the number of pinholes per 100 cm² of the film. The number of pinholes per 100 cm² of the film is calculated as follow.

Number of pinholes (number/100 cm²) = total number of pinholes (number)/test effective area (cm²) × 100 In the present Examples, Gelbo Flex Tester, available from Rigaku Kogyo, was used as the pinhole resistance tester. POROSCOPE DC available from Fischer was used as the pinhole inspection machine.

The number of pinholes formed when the Gelbo flex test was performed 20 times, 50 times, 200 times, and 400 times was measured.

**[Table 1]**

| | | | | Example 1 | Example 2 | Example 3 | Example 4 | Comparative Example 1 |
|---|---|---|---|---|---|---|---|---|
| Composition | Base material layer | PA6 | parts by mass | 100 | 100 | 100 | 100 | 100 |
| | Sealant layer | PA-1 | | 100 | 100 | 100 | 100 | 100 |
| | | PA-2 | | - | - | - | - | - |
| | | PA6 | | - | - | - | - | - |
| | | PA666 | | - | - | - | - | - |
| | | PA6I6T | | - | - | - | - | - |
| | | Proportion of aromatic monomer | mass% | 54 | 54 | 54 | 54 | 54 |
| Layer constitution | Thickness of base material layer | | µm | 61 | 61 | 49 | 49 | 34 |
| | Thickness of sealant layer | | µm | 5 | 8 | 18 | 18 | 34 |
| | Total film thickness | | µm | 66 | 69 | 67 | 67 | 68 |
| | Thickness of sealant layer with respect to total film thickness | | % | 8 | 11 | 26 | 26 | 50 |
| Moisture content of multilayer body | | | ppm | 2330 | 2430 | 4150 | 8220 | 2360 |
| Heat seal strength | Seal temperature | 120°C | N/15 mm | 18.4 | 23.2 | 24.2 | 19.0 | 28.6 |
| | | 150°C | N/15 mm | 19.9 | 25.9 | 29.6 | 22.1 | 29.6 |
| Impact resistance | Film impact test | | kgf cm | 32.4 | 28.0 | 14.2 | 15.1 | 1.1 |
| Pinhole resistance | Gelbo flex test, Number of pinholes | 20 times | Number | 0 | 0 | 0 | 0 | 0 |
| | | 50 times | Number | 0 | 0 | 0 | 0 | 10 |
| | | 200 times | Number | 0 | 0 | 0 | 0 | 23 |
| | | 400 times | Number | 6 | 4 | 6 | 4 | 40 |

**[Table 2]**

| | | | | Example 5 | Example 6 | Example 7 | Example 8 | Comparative Example 2 |
|---|---|---|---|---|---|---|---|---|
| Composition | Base material layer | PA6 | parts by mass | 100 | 100 | 100 | 100 | 100 |
| | Sealant layer | PA-1 | | - | - | - | - | - |
| | | PA-2 | | 100 | 100 | 100 | 100 | 100 |
| | | PA6 | | - | - | - | - | - |
| | | PA666 | | - | - | - | - | - |
| | | PA6I6T | | - | - | - | - | - |
| | | Proportion of aromatic monomer | mass% | 57 | 57 | 57 | 57 | 57 |
| Layer constitution | Thickness of base material layer | | µm | 78 | 65 | 65 | 62 | 35 |
| | Thickness of sealant layer | | µm | 6 | 11 | 14 | 21 | 36 |
| | Total film thickness | | µm | 84 | 76 | 79 | 83 | 71 |
| | Thickness of sealant layer with respect to total film thickness | | % | 8 | 14 | 18 | 25 | 51 |
| Moisture content of multilayer body | | | ppm | 2130 | 2130 | 1540 | 1810 | 1560 |
| Heat seal strength | Seal temperature | 120°C | N/15 mm | 14.1 | 16.4 | 26.4 | 23.1 | 26.5 |
| | | 150°C | N/15 mm | 16.1 | 18.5 | 26.2 | 25.6 | 24.7 |
| Impact resistance | Film impact test | | kgf cm | 31.3 | 28.1 | 21.0 | 18.1 | 1.0 |
| Pinhole resistance | Gelbo flex test, Number of pinholes | 20 times | Number | 0 | 0 | 0 | 0 | 0 |
| | | 50 times | Number | 0 | 0 | 0 | 0 | 8 |
| | | 200 times | Number | 0 | 0 | 0 | 0 | 23 |
| | | 400 times | Number | 3 | 4 | 5 | 10 | 29 |

**[Table 3]**

| | | | | Example 9 | Example 10 | Example 11 | Example 12 | Example 13 |
|---|---|---|---|---|---|---|---|---|
| Composition | Base material layer | PA6 | parts by mass | 100 | 100 | 100 | 100 | 100 |
| | Sealant layer | PA-1 | | 70 | 70 | 70 | 70 | 70 |
| | | PA-2 | | - | - | - | - | - |
| | | PA6 | | 30 | 30 | 30 | - | - |
| | | PA666 | | - | - | - | 30 | 30 |
| | | PA6I6T | | - | - | - | - | - |
| | | Proportion of aromatic monomer | mass% | 38 | 38 | 38 | 38 | 38 |
| Layer constitution | Thickness of base material layer | | µm | 76 | 66 | 61 | 62 | 61 |
| | Thickness of sealant layer | | µm | 4 | 13 | 23 | 6 | 11 |
| | Total film thickness | | µm | 80 | 79 | 84 | 68 | 72 |
| | Thickness of sealant layer with respect to total film thickness | | % | 5 | 16 | 27 | 8 | 15 |
| Moisture content of multilayer body | | | ppm | 3430 | 2610 | 2370 | 2310 | 3490 |
| Heat seal strength | Seal temperature | 120°C | N/15 mm | 13.1 | 24.3 | 23.2 | 13.8 | 23.1 |
| | | 150°C | N/15 mm | 14.5 | 25.6 | 26.1 | 15.9 | 23.2 |
| Impact resistance | Film impact test | | kgf cm | 20.1 | 17.3 | 24.6 | 39.2 | 28.0 |
| Pinhole resistance | Gelbo flex test, Number of pinholes | 20 times | Number | 0 | 0 | 0 | 0 | 0 |
| | | 50 times | Number | 0 | 0 | 0 | 0 | 0 |
| | | 200 times | Number | 0 | 0 | 0 | 0 | 0 |
| | | 400 times | Number | 0 | 0 | 2 | 0 | 0 |

**[Table 4]**

| | | | | Example 14 | Example 15 | Example 16 | Example 17 | Comparative Example 3 |
|---|---|---|---|---|---|---|---|---|
| Composition | Base material layer | PA6 | parts by mass | 100 | 100 | 100 | 100 | 100 |
| | Sealant layer | PA-1 | | 70 | 70 | 70 | 70 | 70 |
| | | PA-2 | | - | - | - | - | - |
| | | PA6 | | - | - | - | - | - |
| | | PA666 | | 30 | - | - | - | - |
| | | PA6I6T | | - | 30 | 30 | 30 | 30 |
| | | Proportion of aromatic monomer | mass% | 38 | 54 | 54 | 54 | 54 |
| Layer constitution | Thickness of base material layer | | µm | 65 | 60 | 59 | 60 | 32 |
| | Thickness of sealant layer | | µm | 17 | 4 | 15 | 21 | 36 |
| | Total film thickness | | µm | 83 | 64 | 74 | 82 | 68 |
| | Thickness of sealant layer with respect to total film thickness | | % | 21 | 6 | 20 | 26 | 53 |
| Moisture content of multilayer body | | | ppm | 2520 | 1430 | 2550 | 2330 | 2380 |
| Heat seal strength | Seal temperature | 120°C | N/15 mm | 25.5 | 9.3 | 24.1 | 27.6 | 26.3 |
| | | 150°C | N/15 mm | 27.8 | 13.3 | 29.1 | 33.0 | 27.6 |
| Impact resistance | Film impact test | | kgf cm | 25.7 | 28.1 | 23.1 | 13.2 | 1.6 |
| Pinhole resistance | Gelbo flex test, Number of pinholes | 20 times | Number | 0 | 0 | 0 | 0 | 0 |
| | | 50 times | Number | 0 | 0 | 0 | 0 | 15 |
| | | 200 times | Number | 0 | 0 | 0 | 0 | 30 |
| | | 400 times | Number | 1 | 6 | 4 | 6 | 38 |

**[Table 5]**

| | | | | Comparative Example 4 | Comparative Example 5 | Comparative Example 6 | Example 18 |
|---|---|---|---|---|---|---|---|
| Composition | Base material layer | PA6 | parts by mass | 100 | 100 | 100 | 100 |
| | Sealant layer | PA-1 | | - | - | - | - |
| | | PA-2 | | - | - | - | - |
| | | PA6 | | 100 | 70 | 70 | - |
| | | PA666 | | - | 30 | - | - |
| | | PA6I6T | | - | - | 30 | 100 |
| | | Proportion of aromatic monomer | mass% | 0 | 0 | 16 | 54 |
| Layer constitution | Thickness of base material layer | | µm | 76 | 61 | 58 | 55 |
| | Thickness of sealant layer | | µm | | 20 | 20 | 19 |
| | Total film thickness | | µm | 76 | 81 | 78 | 74 |
| | Thickness of sealant layer with respect to total film thickness | | % | 0 | 25 | 26 | 26 |
| Moisture content of multilayer body | | | ppm | 2590 | 2530 | 2780 | 2780 |
| Heat seal strength | Seal temperature | 120°C | N/15 mm | 0 | 0 | 0 | 8.5 |
| | | 150°C | N/15 mm | 0 | 0 | 0 | 8.9 |
| Impact resistance | Film impact test | | kgf cm | 43.1 | 48.2 | 48.2 | 48.2 |
| Pinhole resistance | Gelbo flex test, Number of pinholes | 20 times | Number | 0 | 0 | 0 | 0 |
| | | 50 times | Number | 0 | 0 | 0 | 0 |
| | | 200 times | Number | 0 | 0 | 0 | 0 |
| | | 400 times | Number | 0 | 0 | 0 | 2 |

As is apparent from the above results, the multilayer container of the present embodiment had high impact resistance and high sealant strength. Further, the multilayer container was excellent in pinhole resistance. In addition, because the multilayer container can be constituted only by a polyamide resin, the recyclability was able to be improved.

### Reference Signs List

1 first multilayer body
12 sealant layer included in first multilayer body
13 base material layer included in first multilayer body
2 second multilayer body
22 sealant layer included in second multilayer body
23 base material layer included in second multilayer body
10 multilayer container

## Claims

1. A multilayer container comprising:
a first multilayer body including a sealant layer containing a polyamide resin and a base material layer containing an aliphatic polyamide resin; and
a second multilayer body including a sealant layer containing a polyamide resin and a base material layer containing an aliphatic polyamide resin,
wherein
the sealant layer of the first multilayer body and the sealant layer of the second multilayer body face each other and are partially fused,
the sealant layer of the first multilayer body and the sealant layer of the second multilayer body each independently have a thickness of 4 µm or more and 40% or less of a total thickness of the first multilayer body or the second multilayer body,
the polyamide resin contained in the sealant layer of the first multilayer body and the polyamide resin contained in the sealant layer of the second multilayer body are each independently a resin in which 30 mass% or more of all structural units excluding an end group is derived from an aromatic monomer,
the aliphatic polyamide resin contained in the first multilayer body and the aliphatic polyamide resin contained in the second multilayer body are each independently a resin in which 80 mass% or more of all structural units excluding an end group is derived from an aliphatic monomer, and
95 mass% or more of a resin component contained in the multilayer container is the polyamide resins.

2. The multilayer container according to claim 1, wherein the first multilayer body and the second multilayer body each independently have a moisture content of 10000 mass ppm or less immediately before sealing.

3. The multilayer container according to claim 1 or 2, wherein the sealant layer of the first multilayer body and the sealant layer of the second multilayer body each independently have a thickness of 6 µm or more.

4. The multilayer container according to any one of claims 1 to 3, wherein the polyamide resin contained in the sealant layer of the first multilayer body and the polyamide resin contained in the sealant layer of the second multilayer body each independently contain a diamine-derived structural unit and a dicarboxylic acid-derived structural unit, and 70 mol% or higher of the diamine-derived structural unit contains a xylylenediamine-based polyamide resin derived from a xylylenediamine.

5. The multilayer container according to claim 4, wherein 70 mol% or higher of the dicarboxylic acid-derived structural unit in the xylylenediamine-based polyamide resin is an α,ω-linear aliphatic dicarboxylic acid-derived structural unit having from 4 to 20 carbon atoms.

6. The multilayer container according to any one of claims 1 to 5, wherein
the first multilayer body and the second multilayer body each independently have a moisture content of 10000 mass ppm or less immediately before sealing,
the sealant layer of the first multilayer body and the sealant layer of the second multilayer body each independently have a thickness of 6 µm or more,
the polyamide resin contained in the sealant layer of the first multilayer body and the polyamide resin contained in the sealant layer of the second multilayer body each independently contain a diamine-derived structural unit and a dicarboxylic acid-derived structural unit, and 70 mol% or higher of the diamine-derived structural unit contains a xylylenediamine-based polyamide resin derived from a xylylenediamine, and
70 mol% or higher of the dicarboxylic acid-derived structural is an α,ω-linear aliphatic dicarboxylic acid-derived structural unit having from 4 to 20 carbon atoms.

7. The multilayer container according to any one of claims 1 to 6, wherein in at least one of the first multilayer body and the second multilayer body, the sealant layer and the base material layer are in contact with each other directly or with an adhesive layer interposed between the sealant layer and the base material layer, and the sealant layer is an unstretched film.

8. A method for producing a recycled polyamide resin, the method comprising crushing a multilayer container according to any one of claims 1 to 7.

9. A method for producing a multilayer container,
the multilayer container including:
a first multilayer body including a sealant layer containing a polyamide resin and a base material layer containing an aliphatic polyamide resin; and
a second multilayer body including a sealant layer containing a polyamide resin and a base material layer containing an aliphatic polyamide resin,
the method comprising fusing the first multilayer body and the second multilayer body with the sealant layer of the first multilayer body and the sealant layer of the second multilayer body facing each other and being partially fused to each other,
wherein
the sealant layer of the first multilayer body and the sealant layer of the second multilayer body each independently have a thickness of 4 µm or more and 40% or less of a total thickness of the first multilayer body or the second multilayer body,
the polyamide resin contained in the sealant layer of the first multilayer body and the polyamide resin contained in the sealant layer of the second multilayer body are each independently a resin in which 30 % or more of mass of all structural units excluding an end group is derived from an aromatic monomer,
the aliphatic polyamide resin contained in the first multilayer body and the aliphatic polyamide resin contained in the second multilayer body are each independently a resin in which 80 mass% or more of all structural units excluding an end group is derived from an aliphatic monomer,
95 mass% or more of a resin component contained in the multilayer container is the polyamide resins, and
the first multilayer body and the second multilayer body in the fusing each independently have a moisture content of 10000 mass ppm or less immediately before sealing.

10. The method for producing a multilayer container according to claim 9, wherein the multilayer container is a multilayer container according to any one of claims 1 to 7.
